# EUROPÄISCHE PATENTSCHRIFT

(11) **EP 0 519 924 B1**
(45) Veröffentlichungstag und Bekanntmachung des Hinweises auf die Patenterteilung: **20.07.1994**
(21) Anmeldenummer: 90917718.0
(22) Anmeldetag: 03.12.1990
(51) Int. Cl.: H01R 13/428

(54) **KONTAKTBAUTEIL FÜR EINEN VERTEILER IN EINEM TELEKOMMUNIKATIONSNETZ**
CONTACT COMPONENT FOR A DISTRIBUTION SWITCHBOARD IN A TELECOMMUNICATION NETWORK
COMPOSANT DE CONTACT POUR TABLEAUX DE DISTRIBUTION DE RESEAUX DE TELECOMMUNICATIONS

(30) Priorität: 14.03.1990 DE 4008130
(43) Veröffentlichungstag der Anmeldung: 30.12.1992
(73) Patentinhaber: SIEMENS AKTIENGESELLSCHAFT, 80333 München (DE)
(72) Erfinder: DOLANSKY, Franz, D-8000 München 80 (DE); STEINER, Ewald, D-8137 Berg 3 (DE)
(86) Internationale Anmeldenummer: DE9000934
(87) Internationale Veröffentlichungsnummer: WO9114299

(56) Entgegenhaltungen:
- DE-A- 3 702 627
- FR-A- 2 538 208
- GB-A- 2 117 577

## Beschreibung

Die Erfindung bezieht sich auf ein Kontaktbauteil für einen Verteiler in einem Telekommunikationsnetz, vor allem in einer Fernsprechvermittlungsanlàge, wobei das flache Kontaktbauteil auf seiner Frontseite zwei Reihen von Kontaktelementen für ankommende und abgehende Leitungen aufweist, die mit in das Innere des Kontaktbauteils ragenden Kontaktfedern versehen sind.

Ein derartiges Kontaktbauteil ist z. B. durch die deutsche Patentschrift DE-C-26 58 296 bekannt geworden. Danach weist das Kontaktbauteil ein aus einem Rückteil und einem Frontteil zusammensteckbares Gehäuse auf, das mittels Rasthaken zusammengehalten wird. Jeweils zwei paarweise in den beiden Reihen gegenüberliegende Kontaktelemente bilden einen Trennkontakt, der durch einen von der Frontseite her einschiebbaren Trennstecker unterbrochen werden kann. Die Kontaktelemente werden bei der Montage zunächst in das Rückteil eingeführt und mittels einer Hilfsvorrichtung in einer Lage gehalten, die das Aufstecken des Frontteils ermöglicht.

Nach der DE-C-32 12 013 ist bei einem ähnlichen Kontaktbauteil eines der beiden Kontaktteile zur Rückseite des Kontaktbauteils verlängert und bildet dort ein Anschaltekontakt für einen Schutzstecker. Dieses lange Kontaktteil läßt sich hier nur entgegen der allgemeinen Montagerichtung von der Rückseite her in das Rückteil einsetzen. Dadurch wird die Automatisierbarkeit der Montage erschwert.

Der Erfindung liegt die Aufgabe zugrunde das Kontaktbauteil so auszubilden, daß es leichter hergestellt und zusammengebaut werden kann.

Diese Aufgabe wird durch die Erfindung gemäß Anspruch 1 gelöst. Durch die Ausbildung der Haltelappen an den Kontaktteilen ist es möglich diese so am Rückteil zu fixieren, daß auf weitere Hilfswerkzeuge verzichtet werden kann. Dadurch ist es möglich, die Rückteile unabhängig von den Frontteilen z. B. an mehreren Plätzen mit den Kontaktbauteilen zu bestücken und anschließend an einer Station in einem schnellen Arbeitsgang das Frontteil aufzusetzen. Da die Haltelappen in die Steckrichtung ragen, können sie in einem Zug mit dem Einschieben in das Rückteil an diesem fixiert werden, ohne daß es dazu noch weitere Maßnahmen bedarf.

Vorteilhafte Weiterbildungen der Erfindung sind in den Ansprüchen 2 bis 5 gekennzeichnet:

Durch die Weiterbildung nach den Ansprüchen 2 und 3 bilden die Haltelappen eine u-förmige Aufnahme, in die entsprechende Partien des Rückteils eingreifen.

Durch die Weiterbildung nach Anspruch 4 werden die Kontaktteile auf der Seite des Frontteils unmittelbar an der Außenwand gehalten. Dies ermöglicht eine besonders genaue Fixierung in Bezug auf das Frontteil. Dabei ist es von Vorteil, daß die Kontaktteile durch einen abgekröpften Bereich des Kontaktteils oder des Haltelappens zwischen dem Frontteil und dem Rückteil in der Einsteckrichtung gegen Verschiebung gesichert werden. Auf wechselseitig angeordnete Fixierzapfen und Fixierlöcher im Gehäuse bzw. den Kontaktteilen kann verzichtet werden. Derartige Fixiermittel erschweren das Zusammenstecken der Teile.

Die Weiterbildung nach Anspruch 5 vereinfacht die Montage des Kontaktbauteils erheblich. Das lange Kontaktteil kann nun in der allgemeinen Montagerichtung von der Frontseite her an das Rückteil angesetzt und an diesem sicher fixiert werden. Dabei ist der Haltelappen nach innen abgekröpft und umgreift die zugehörige Außenwand von innen. Das gegenüberliegende Kontaktteil ist an der gegenüberliegenden Außenwand innen entlang geführt. Der Haltelappen umgreift dabei die Außenwand von außen.

Von besonderem Vorteil ist es bei einem Kontaktbauteil nach der Erfindung, daß z. B. schadhafte Kontaktteile leicht ausgewechselt werden können, ohne daß nach Abziehen des Frontteils besondere Maßnahmen zur Fixierung der übrigen Kontaktteile erforderlich sind.

Im folgenden wird die Erfindung anhand eines in der Zeichnung dargestellten Ausführungsbeispiels näher erläutert.

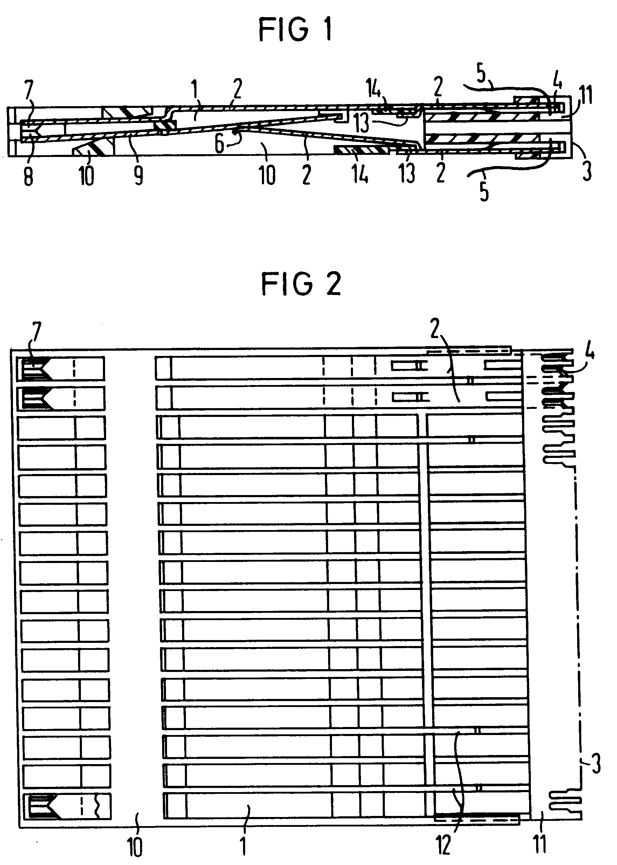

Die beiden Figuren 1 und 2 zeigen in einer Schnittdarstellung und einer Draufsicht ein Kontaktbauteil 1, das mit zwei parallelen Reihen von paarweise gegenüberliegenden Kontaktteilen 2 bestückt ist. Diese sind auf der Frontseite 3 des Kontaktbauteils 1 als Schneidklemmen 4 ausgebildet, an die ankommende und abgehende Leitungen 5 angeschlossen sind. Die Kontaktteile sind im Inneren des Kontaktbauteils 1 als Kontaktfedern ausgebildet, die über einen Trennkontakt 6 elektrisch verbunden sind. Dieser kann mittels eines Trennsteckers unterbrochen werden, der in das Kontaktbauteil von der Frontseite her einschiebbar ist.

Eine Reihe der Kontaktteile 2 ist bis zur Rückseite des Kontaktbauteils 1 verlängert und bildet dort Federkontakte 7 für einen Schutzstecker mit einer Stromsicherung. Der Schutzstecker ist mit Gegenkontakten 8 einer Zwischenfeder 9 des Kontaktbauteils 1 verbindbar an der des kürzere Kontaktteil 2 mit ihrem inneren Ende den Trennkontakt 6 bildend federnd anliegt. Auf diese Weise wird eine elektrische Verbindung zwischen den ankommenden und abgehenden Leitungen 5 hergestellt.

Das Kontaktbauteil 1 weist ein zweigeteiltes Gehäuse auf, das aus einem Rückteil 10 und ein mit diesem zusammensteckbaren Frontteil 11 besteht. Die beiden Teile werden durch Rasthaken 12 zusammengehalten.

Die Kontaktteile 2 sind mittels herausgerissenen Haltelappen 13 an Außenwänden 14 des Rückteils 10 fixiert. Das längere Kontaktteil 2 liegt dabei an seiner Außenwand 14 außen an. Der Haltelappen 13 ist nach innen abgekröpft und hintergreift die Außenwand 14 von innen. Der gekröpfte Abschnitt verläuft in einer schmalen Lücke zwischen dem Rückteil 10 und dem Frontteil 11, wodurch das Kontaktteil 2 in seiner Längsrichtung gegen Verschiebung fixiert ist.

Das gegenüberliegende kürzere Kontaktteil 2 liegt an der zugehörigen Außenwand 14 innen an und verläuft im Bereich seines Haltelappens 13 gekröpft, daß sich zusammen mit dem gestreckten Haltelappen 13 eine u-förmige Aufnahme für den Stirnbereich der Außenwand 14 ergibt. Die Kröpfung liegt ähnlich wie beim langen Kontaktteil 2 zwischen dem Rückteil 10 und dem Frontteil 11.

Die Kontaktteile 2 werden beim Zusammenbau des Kontaktbauteils 1 zunächst von der Frontseite her in das Rückteil eingeschoben, wobei sie mit Hilfe der Haltelappen 13 an den Außenwänden klemmend fixiert werden. Die Kontaktteile 2 befinden sich dadurch ohne weitere Hilfsmittel in einer montagegerechten Lage, die ein einfaches Aufstecken des Frontteils 11 in der gleichen Montagerichtung ermöglicht.

## Patentansprüche

1. Kontaktbauteil (1) für einen Verteiler in einem Telekommunikationsnetz, vor allem in einer Fernsprechanlage, wobei das flache, stapelbare Kontaktbauteil (1) zwei Reihen von Kontaktteilen (2) aufweist, an die auf der Frontseite (3) des Kontaktbauteils (1) ankommende und abgehende Leitungen (5) anschließbar sind, wobei die Kontaktteile (2) im inneren des Kontaktbauteils als Kontaktfedern ausgebildet sind und jeweils zwei paarweise gegenüberliegende Kontaktteile (2) einen Trennkontakt (6) oder Schaltkontakt bilden und wobei das Kontaktbauteil (1) ein aus einem Rückteil (10) und einem Frontteil (11) zusammensteckbares Gehäuse aufweist, an dem die Kontaktteile (2) verankert sind,
**dadurch gekennzeichnet,**
daß die Kontaktteile einen herausgerissenen, sich in der Steckrichtung erstreckenden Haltelappen (13) aufweisen, der ein Wandteil des Rückteils (10) hintergreift und das Kontaktteil (2) am Rückteil (10) montagegerecht fixiert.

2. Kontaktbauteil nach Anspruch 1,
**dadurch gekennzeichnet,**
daß der Haltelappen (13) in die Richtung der Rückseite des Kontaktbauteils (1) ragt.

3. Kontaktbauteil nach Anspruch 1 oder 2,
**dadurch gekennzeichnet,**
daß das Kontaktteil (2) und dar Haltalappen (13) zu einer u-förmig verlaufenden Kontur gebogen sind.

4. Kontaktbauteil nach einam der Ansprüche 1 bis 3,
**dadurch gekennzeichnet,**
daß das Kontaktteil (2) mit dam Haltelappen (13) eine Außenwand (14) des Rückteils (10) von der Frontsaite (3) her umgreift.

5. Kontaktbauteil nach einem der vorhergehenden Ansprüche,
**dadurch gekennzeichnet,**
daß das zur Rückseite das Kontaktbauteils (1) verlängerte Kontaktteil (2) an diesem außen vorbeigeführt ist und mit seinem Haltelappen (13) die stegartige Außenwand (14) des Rückteils (10) innen hintergreift.

## Claims

1. Contact component (1) for a distribution frame in a telecommunications network, especially in a telephone system, in which the flat, stackable contact component (1) exhibits two rows of contact parts (2) to which incoming and outgoing lines (5) can be connected at the front (3) of the contact component (1), the contact parts (2) being constructed as contact springs in the interior of the contact component and in each case two contact parts (2) opposite one another in pairs forming a disconnecting contact (6) or switching contact and the contact component (1) exhibiting a housing which can be assembled from a rear part (10) and a front part (11) and at which the contact parts (2) are anchored, characterised in that the contact parts exhibit a cut-out holding tab (13) extending in the direction of insertion, which engages the rear of a wall part of the rear part (10) and correctly fixes the contact part (2) at the rear part (10) for assembly.

2. Contact component according to Claim 1, characterised in that the holding tab (13) protrudes in the direction of the rear of the contact component (1).

3. Contact component according to Claim 1 or 2, characterised in that the contact part (2) and the holding tab (13) are bent to form a U-shape.

4. Contact component according to one of Claims 1 to 3, characterised in that the contact part (2) encircles an outside wall (14) of the rear part (10) from the front (3) with the holding tab (13).

5. Contact component according to one of the preceding claims, characterised in that the contact part (2) extended towards the rear of the contact component (1) extends beyond the latter on the outside and with its holding tab (13) engages the rear of the web-like outside wall (14) of the rear part (10) on the inside.

## Revendications

1. Elément de contact (1) pour un répartiteur d'un réseau de télécommunication, surtout d'une installation téléphonique, l'élément de contact (1) plat et empilable comportant deux rangées de pièces de contact (2) auxquelles des lignes (5) d'arrivée et de départ peuvent être raccordées sur la face avant (3) de l'élément de contact (1), les pièces de contact (2) étant constituées, à l'intérieur de l'élément de contact, sous la forme de ressorts de contact et respectivement deux pièces de contact (2) apposées par couple forment un contact de coupure (6) ou un contact de commutation, et que l'élément de contact (1) comportant un boîtier, qui peut être composé d'une partie arrière (10) et d'une partie avant (11) emboîtées et sur lequel sont ancrées les pièces de contact (2), caractérisé par le fait que
les pièces de contact comportent une patte (13) de maintien obtenue par crevé, qui s'étend dans la direction d'emboitage, qui vient derrière un élément de paroi de la partie arrière (10) et qui immobilise, en bonne position pour le montage, la pièce de contact (2) par rapport à la partie arrière (10).

2. Elément de contact suivant la revendication 1, caractérisé par le fait que la patte (13) de maintien fait saillie en direction de la face arrière de l'élément de contact (1).

3. Elément de contact suivant la revendication 1 ou 2, caractérisé par le fait que la pièce de contact (2) et les pattes (13) de maintien sont coudées en un contour en forme de U.

4. Elément de contact suivant l'une des revendications 1 à 3, caractérisé par le fait que la pièce de contact (2) entoure, à partir de la face avant (3), par la patte (13) de retenue, une paroi (14) extérieure de la partie arrière (10).

5. Elément de contact suivant l'une des revendications précédentes, caractérisé par le fait que la pièce de contact (2), prolongée vers la face arrière de l'élément de contact (1), passe à l'extérieur de celui-ci et vient, à l'intérieur, par sa patte (13) de maintien, derrière la paroi (14) extérieure en forme de réglette (14) de la partie arrière (10).
